(19) Europäisches Patentamt
European Patent Office
Office européen des brevets

(11) **EP 3 396 415 A1**

(12) **EUROPÄISCHE PATENTANMELDUNG**

(43) Veröffentlichungstag:
**31.10.2018 Patentblatt 2018/44**

(51) Int Cl.:
**G01S 17/89** (2006.01)　　　**G01S 17/93** (2006.01)
**G01S 7/481** (2006.01)

(21) Anmeldenummer: **18166942.5**

(22) Anmeldetag: **12.04.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **24.04.2017 DE 102017206796**

(71) Anmelder: **Robert Bosch GmbH
70442 Stuttgart (DE)**

(72) Erfinder:
• **Baumgart, Eugen
70376 Stuttgart (DE)**
• **Graf, Tobias
70469 Stuttgart (DE)**
• **Werner, Tobias
71069 Sindelfingen (DE)**
• **Traenkle, Benjamin
70186 Stuttgart (DE)**
• **Franek, Marzena
70191 Stuttgart (DE)**

(54) **LICHTAUSSENDEVORRICHTUNG UND VERFAHREN ZUM AUSSENDEN VON LICHT**

(57)　Die Erfindung betrifft eine Lichtaussendevorrichtung (la), mit: einer Phased-Array-Antenne (2), welche dazu ausgebildet ist, einen Lichtstrahl (L) auszusenden; einer optischen Einrichtung (3), mit mindestens einem ersten optischen Element (31) und mindestens einem zweiten optischen Element (32), welche im Strahlengang des ausgesendeten Lichtstrahls (L) angeordnet sind, wobei das mindestens eine erste optische Element (31) und das mindestens eine zweite optische Element (32) eine gemeinsame Brennebene (B) aufweisen, wobei der Lichtstrahl (L) mittels des mindestens einen ersten optischen Elements (31) in die Brennebene (B) fokussiert und nach dem Durchgang durch das mindestens eine zweite optische Element (32) als Ausgangsstrahl (M) ausgesendet wird; und einer Blendeneinrichtung (4), welche im Bereich der Brennebene (B) im Strahlengang angeordnet ist, wobei die Blendeneinrichtung (4) mindestens eine Blendenöffnung (40) aufweist, und wobei eine Position der mindestens einen Blendenöffnung (40) innerhalb der Brennebene (B) und/oder ein Öffnungsgrad der mindestens einen Blendenöffnung (40) veränderbar sind.

**Fig. 3**

**Beschreibung**

Die vorliegende Erfindung betrifft eine Lichtaussendevorrichtung und ein Verfahren zum Aussenden von Licht, insbesondere zur Verwendung für ein Lidarsystem.

Stand der Technik

Um autonomes Fahren zu ermöglichen, müssen Entfernungen und Geschwindigkeiten exakt gemessen werden. Hierzu kommen Lidar-Systeme zum Einsatz, wobei Laserimpulse ausgesendet werden und das zurückgestreute Licht detektiert wird. Anhand der Lichtlaufzeit können die Abstände und Entfernungen ermittelt werden.

Es besteht ein Bedarf an Lidar-Systemen mit einer möglichst hohen Winkelauflösung und einem möglichst großen Sichtfeld. Besonders geeignet sind hierzu Phased-Array-Antennen, d. h. phasengesteuerte Gruppenantennen mit einer Vielzahl von miteinander verschalteten einzelnen Lichtemittern, welche matrixförmig angeordnet sind und zueinander kohärente Laserstrahlung aussenden. Die Phasen und gegebenenfalls die Amplituden der Lichtemitter sind unabhängig voneinander steuerbar. In Abhängigkeit von den Phasenlagen bzw. Phasenverschiebungen der von den Lichtemittern ausgesendeten Laserstrahlen kommt es zu konstruktiver und destruktiver Interferenz. Entsprechend ergeben sich Interferenzmaxima bzw. Hauptkeulen und Nebenkeulen. Die Ausrichtung und Abstrahlrichtung der Hauptkeulen und Nebenkeulen kann durch geeignet gewählte Phasenlagen eingestellt werden.

Offenbarung der Erfindung

Die Erfindung betrifft eine Lichtaussendevorrichtung mit den Merkmalen des Patentanspruchs 1 und ein Verfahren zum Aussenden von Licht mit den Merkmalen des Patentanspruchs 9.

Gemäß einem ersten Aspekt betrifft die Erfindung demnach eine Lichtaussendevorrichtung mit einer Phased-Array-Antenne, einer optischen Einrichtung und einer Blendeneinrichtung. Die Phased-Array-Antenne ist dazu ausgebildet, einen Lichtstrahl auszusenden. Die optische Einrichtung umfasst mindestens ein erstes optisches Element und mindestens ein zweites optisches Element, welche im Strahlengang des ausgesendeten Lichtstrahls angeordnet sind. Das mindestens eine erste optische Element und das mindestens eine zweite optische Element weisen eine gemeinsame Brennebene bzw. Fourierebene auf. Der Lichtstrahl wird mittels des mindestens einen ersten optischen Elements in die Brennebene fokussiert und wird nach dem Durchgang durch das mindestens eine zweite optische Element als Ausgangsstrahl ausgesendet. Die Blendeneinrichtung ist im Bereich der Brennebene, vorzugsweise in der Brennebene, im Strahlengang angeordnet und weist mindestens eine Blendenöffnung auf. Eine Position der mindestens

tens einen Blendenöffnung innerhalb der Brennebene und/oder ein Öffnungsgrad der mindestens einen Blendenöffnung sind veränderbar.

Gemäß einem zweiten Aspekt betrifft die Erfindung ein Verfahren zum Aussenden von Licht. Ein Lichtstrahl wird mittels einer Phased-Array-Antenne auf eine optische Einrichtung ausgesendet. Die optische Einrichtung weist mindestens ein erstes optisches Element und mindestens ein zweites optisches Element auf, welche im Strahlengang des ausgesendeten Lichtstrahls angeordnet sind. Das mindestens eine erste optische Element und das mindestens eine zweite optische Element weisen eine gemeinsame Brennebene auf, wobei im Bereich der Brennebene, vorzugsweise in der Brennebene, im Strahlengang eine Blendeneinrichtung angeordnet ist. Die Blendeneinrichtung weist mindestens eine Blendenöffnung auf. Eine Position der mindestens einen Blendenöffnung und/oder ein Öffnungsgrad der mindestens einen Blendenöffnung werden verändert.

Bevorzugte Ausführungsformen sind Gegenstand der jeweiligen Unteransprüche.

Vorteile der Erfindung

Die einzelnen Lichtemitter der Phased-Array-Antenne erzeugen einen Lichtstrahl, welcher sich im Fernbereich im Wesentlichen wie an einem Gitter gestreutes Licht verhält. Es entsteht somit ein Interferenzmuster, wobei die Aussendewinkel der Interferenzmaxima von einem Abstand zwischen den einzelnen Lichtemittern der Phased-Array-Antenne abhängen. Während es bei Radarwellen möglich ist, durch geeignet gewählte Abstände höhere Beugungsordnungen bzw. Nebenkeulen zu unterdrücken, ist dies bei Licht im optischen Wellenlängenbereich aufgrund der deutlich geringeren Wellenlänge meist technisch nicht mehr möglich. Um mit der Lichtaussendevorrichtung jedoch gezielt bestimmte Winkelbereiche beleuchten zu können, ist es jedoch vorteilhaft, die auftretenden Nebenkeulen zu beseitigen.

Die erfindungsgemäße Lichtaussendevorrichtung ermöglicht dies mittels einer zwischen optischen Elementen angeordneten Blendeneinrichtung. Durch gezieltes Verändern der Position bzw. des Öffnungsgrads der mindestens einen Blendenöffnung ist es möglich, bestimmte Winkelbereiche des ausgesendeten Lichtstrahls auszublenden. Dadurch wird eine sehr gezielte Beleuchtung ermöglicht.

Gemäß einer bevorzugten Weiterbildung der Lichtaussendevorrichtung sind das mindestens eine erste optische Element und das mindestens eine zweite optische Element als Sammellinsen mit identischer Brennweite ausgebildet. Ein Abstand zwischen dem mindestens einen ersten optischen Element und dem mindestens einen zweiten optischen Element entspricht der doppelten Brennweite. Die verschiedenen Beugungsordnungen werden durch eine derartige Anordnung bei verschiedenen Abständen relativ zur optischen Achse der Phased-Array-Antenne in die Brennebene fokussiert.

Die optische Achse steht hierbei senkrecht zur Ebene, in welcher die einzelnen Lichtemitter der Phased-Array-Antenne angeordnet sind. D. h. die optische Achse entspricht derjenigen Richtung, in welcher sich die Hauptkeule eines Lichtstrahls der Phased-Array-Antenne ausbreitet, falls die Lichtemitter der Phased-Array-Antenne ohne Phasenverschiebung Licht aussenden.

Gemäß einer bevorzugten Weiterbildung sind das mindestens eine erste optische Element und das mindestens eine zweite optische Element als Spiegelelemente ausgebildet.

Der Abstand $r_n$ der n-ten Beugungsordnung von der optischen Achse in der Brennebene hängt von der Brennweite f und dem Aussendewinkel $\alpha_n$ gemäß folgender Formel ab:

$$r_n = f \cdot \tan \alpha_n.$$

Durch Verändern der Position der mindestens einen Blendenöffnung bzw. durch Verändern des Öffnungsgrads der mindestens einen Blendenöffnung ist es somit möglich, lediglich Anteile des Lichtstrahls mit vorgegebenen Abständen zur optischen Achse durchzulassen und andere Anteile des Lichtstrahls auszublenden. Die Erfindung erlaubt es somit, gezielt bestimmte Beugungsordnungen auszublenden bzw. nur ausgewählte Beugungsordnungen durchzulassen.

Gemäß einer bevorzugten Weiterbildung der Lichtaussendevorrichtung umfasst die Blendeneinrichtung eine Vielzahl von Blendenöffnungen, welche unabhängig voneinander geöffnet oder geschlossen werden können. Unerwünschte Beugungsordnungen, beispielsweise bestimmte oder sämtliche Nebenkeulen können durch Schließen der Blenden bei den entsprechenden Abständen ausgeblendet werden.

Vorzugsweise umfasst die Phased-Array-Antenne eine Vielzahl von entlang einer Achse angeordneten Phasenantennen, wobei die Blendenöffnung vorzugsweise als Lochblende oder Schlitzblende ausgebildet ist, welche in der Brennebene parallel zu der Achse verschiebbar ist. Die Blendenöffnung wird somit derart verschoben, dass lediglich ausgewählte Beugungsordnungen, vorzugsweise lediglich die Hauptkeule, durch die Blende hindurch treten, während unerwünschte Beugungsordnungen ausgeblendet werden.

Gemäß einer bevorzugten Weiterbildung umfasst die Lichtaussendevorrichtung weiter eine Steuereinrichtung, welche dazu ausgebildet ist, in Abhängigkeit von Phasen und Amplituden der Lichtemitter der Phased-Array-Antenne die Blendeneinrichtung anzusteuern, um die Position und/oder den Öffnungsgrad der mindestens einen Blendenöffnung derart zu verändern, dass vorgegebene Interferenzmaxima bzw. Beugungsordnungen des ausgesendeten Lichtstrahls mittels der Blendeneinrichtung entweder ausgeblendet oder durchgelassen werden.

Insbesondere kann die Steuereinrichtung die Position und/oder den Öffnungsgrad der mindestens einen Blendenöffnung derart verändern, dass eine Hauptkeule des ausgesendeten Lichtstrahls durchgelassen wird und Nebenkeulen des ausgesendeten Lichtstrahls ausgeblendet werden.

Gemäß einer weiteren Ausführungsform der Lichtaussendevorrichtung umfasst die Blendeneinrichtung eine drehbare Scheibe, wobei eine Vielzahl von Blendenöffnungen bei unterschiedlichen Radien und bei unterschiedlichen Winkeln auf der Scheibe ausgebildet ist. Bei einer Phased-Array-Antenne mit eindimensional, d. h. zeilenförmig angeordneten Lichtemittern liegen die Hauptkeulen und Nebenkeulen im Wesentlichen in einer Aussendeebene, wobei die Lichtemitter in der Aussendeebene liegen. Ist die Scheibe senkrecht zu der Aussendeebene angeordnet, wobei die Aussendeebene die Scheibe im Wesentlichen mittig schneidet, so werden durch Drehen der Scheibe unterschiedliche Blendenöffnungen in die Aussendeebene hinein bewegt. Aufgrund der verschiedenen radialen Positionen der Blendenöffnungen können dadurch bestimmte Beugungsordnungen ausgeblendet oder durchgelassen werden.

Gemäß einer bevorzugten Weiterbildung des Verfahrens werden in Abhängigkeit von Phasen und Amplituden der Phased-Array-Antenne die Position und/oder der Öffnungsgrad der mindestens einen Blendenöffnung derart verändert, dass vorgegebene Interferenzmaxima des ausgesendeten Lichtstrahls mittels der Blendeneinrichtung entweder ausgeblendet oder durchgelassen werden.

Vorzugsweise wird die Hauptkeule des ausgesendeten Lichtstrahls durchgelassen und die Nebenkeulen des ausgesendeten Lichtstrahls werden ausgeblendet.

Kurze Beschreibung der Zeichnungen

Es zeigen:

Figur 1        eine schematische Querschnittsansicht eine Lichtaussendevorrichtung gemäß einer ersten Ausführungsform der Erfindung, wobei die Hauptkeule des Lichtstrahls mittig ausgesendet wird;

Figur 2        in Figur 1 illustrierte Lichtaussendevorrichtung, wobei die Aussenderichtung des Lichtstrahls variiert wird, ohne die Blendeneinrichtung zu verändern;

Figur 3        die in Figur 2 illustrierte Lichtaussendevorrichtung, wobei zusätzlich die Blendenöffnung in der Brennebene verschoben wird;

Figuren 4-6    Illustrationen für verschiedene Szenarien von Amplituden und Phasen der von den Lichtemittern ausgesendeten Einzelstrahlen, von Intensitäten von Beugungsordnungen vor und nach dem Durchgang durch die Blende und von einer Position der Blendenöffnung;

Figur 7     eine schematische Querschnittsansicht eine Lichtaussendevorrichtung gemäß einer zweiten Ausführungsform der Erfindung, wobei die Hauptkeule des Lichtstrahls mittig ausgesendet wird;

Figur 8     die in Figur 7 illustrierte Lichtaussendevorrichtung, wobei die Aussenderichtung des Lichtstrahls variiert wird und die Blendenöffnung in der Brennebene verschoben wird;

Figur 9     eine Blendeneinrichtung für eine Lichtaussendevorrichtung gemäß einer weiteren Ausführungsform der Erfindung; und

Figur 10     ein Flussdiagramm eines Verfahrens zum Aussenden von Licht.

In allen Figuren sind gleiche bzw. funktionsgleiche Elemente und Vorrichtungen mit denselben Bezugszeichen versehen. Verschiedene Ausführungsformen können beliebig miteinander kombiniert werden, sofern dies sinnvoll ist.

Beschreibung der Ausführungsbeispiele

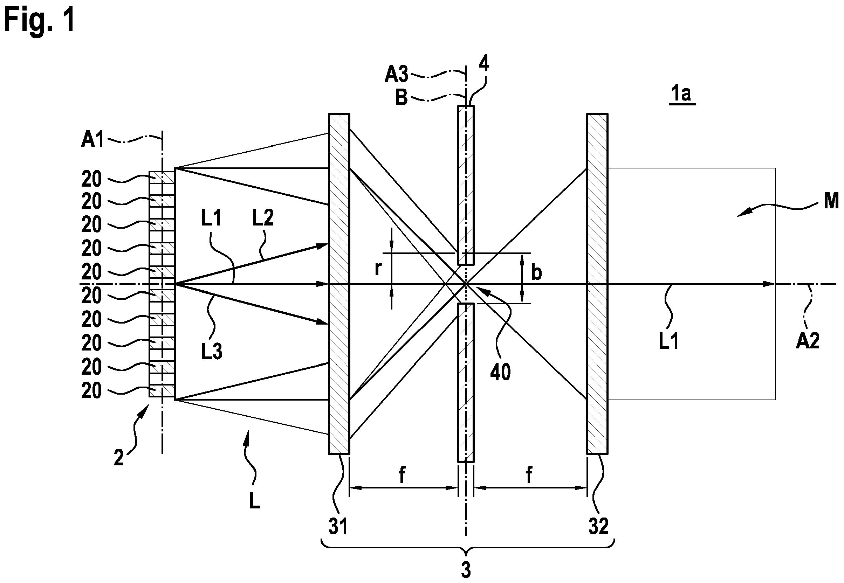

In Figur 1 ist eine schematische Querschnittsansicht eine Lichtaussendevorrichtung 1a gemäß einer ersten Ausführungsform der Erfindung illustriert. Die Lichtaussendevorrichtung 1a umfasst eine phasengesteuerte Gruppenantenne bzw. Phased-Array-Antenne 2 mit einer Vielzahl von einzelnen Phasenantennen bzw. Lichtemittern 20, welche in einer Zeile entlang einer ersten Achse A1 in vorgegebenen und vorzugsweise konstanten Abständen relativ zueinander positioniert sind. Es ist jedoch auch eine zweidimensionale, array- bzw. matrixförmige Anordnung möglich. Die Lichtemitter 20 senden Laserlicht aus, wobei eine relative Phase und Amplituden der von den Lichtemittern 20 ausgesendeten Laserstrahlen einstellbar sind. Vorzugsweise liegt die Wellenlänge des ausgesendeten Laserlichts im Infrarot- oder Nahinfrarot-Bereich, um Störungsrisiken und Risiken für das menschliche Auge zu reduzieren. Die einzelnen Laserstrahlen der Lichtemitter 20 bilden einen gemeinsamen Lichtstrahl L. Durch Interferenz bilden sich mehrere Beugungsmaxima bzw. Keulen. Beispielhaft können eine Hauptkeule L1 und zwei Nebenkeulen L2, L3 auftreten.

In einem vorgegebenen Abstand von der Phased-Array-Antenne 2 befindet sich eine optische Einrichtung 3 mit einer ersten Linse 31 und einer zweiten Linse 32, welche als Sammellinsen mit identischer Brennweite f ausgebildet sind. Die erste Linse 31 und die zweite Linse 32 sind parallel zur ersten Achse A1 im Strahlengang des Lichtstrahls L angeordnet. In einer gemeinsamen Brennebene zwischen der ersten Linse 31 und der zweiten Linse 32 befindet sich eine Blendeneinrichtung 4. Der Abstand zwischen der Blendeneinrichtung 4 und der ersten Linse 31 bzw. zweiten Linse 32 entspricht somit jeweils der Brennweite f. Die Brennebene B ist senkrecht zu einer zweiten Achse A2, welche der optischen Achse der Phased-Array-Antenne 2 entspricht und senkrecht auf einem Zentrum der Phased-Array-Antenne 2 steht.

Die erste Linse 31 und die zweite Linse 32 können als Fourierlinsen, als diffraktive oder als holographische optische Elemente ausgebildet sein.

Die verschiedenen Beugungsmaxima bzw. Keulen werden in die Brennebene B fokussiert, wobei ein Abstand r des fokussierten Bereichs relativ zur zweiten Achse A2 von der Ordnung des Beugungsmaximums abhängt. In dem in Figur 1 illustrierten Szenario breitet sich die Hauptkeule L1 entlang der zweiten Achse A2 aus und wird auf einen Schnittpunkt der zweiten Achse A2 mit der Brennebene B fokussiert. Eine erste Nebenkeule L2 wird auf einen Bereich in einem Abstand r entlang einer dritten Achse A3, welche parallel zur ersten Achse A1 in der Brennebene B liegt, in die Brennebene B fokussiert.

Die Blendeneinrichtung 4 umfasst eine kreisförmige oder schlitzförmige Blendenöffnung 40, welche eine Breite b aufweist, welche kleiner ist als der doppelte Abstand r der ersten Nebenkeule L2 in der Brennebene B. In der in Figur 1 gezeigten Ausgangslage liegt ein Zentrum der Blendenöffnung 40 genau auf der zweiten Achse A2. Somit tritt lediglich der Anteil der Hauptkeule L1 durch die Blendeneinrichtung 4 hindurch, während die Anteile der Nebenkeulen L2 und L3 durch die Blendeneinrichtung 4 ausgeblendet werden. Durch die zweite Linse 32 wird der verbleibende Anteil des Lichtstrahls L wieder kollimiert und als Ausgangsstrahl M ausgesendet. Der Ausgangsstrahl M entspricht der Hauptkeule L1.

Durch eine Ansteuerung und Änderung der Phasenlage der Lichtemitter 20 können die Aussendewinkel der Beugungsmaxima bzw. Keulen L1, L2, L3 relativ zur zweiten Achse A2 verändert werden. Bleibt die Blendeneinrichtung 4 unverändert, so wandert derjenige Anteil des auf die Brennebene fokussierten Lichtstrahls L, welcher der ersten Nebenkeule L2 entspricht, auf die zweite Achse A2 zu und gelangt schließlich durch die Blendenöffnung 40. Der Ausgangsstrahl M entspricht somit sowohl der Hauptkeule L1 als auch der ersten Nebenkeule L2.

Um zu verhindern, dass unerwünschte Nebenkeulen L2, L3 durch die Blendeneinrichtung 4 gelangen können, umfasst die Lichtaussendevorrichtung 1a daher weiter eine (nicht gezeigte) Steuereinrichtung, welche dazu ausgebildet ist, die Blendeneinrichtung 4 anzusteuern und entlang der dritten Achse A3 zu verschieben.

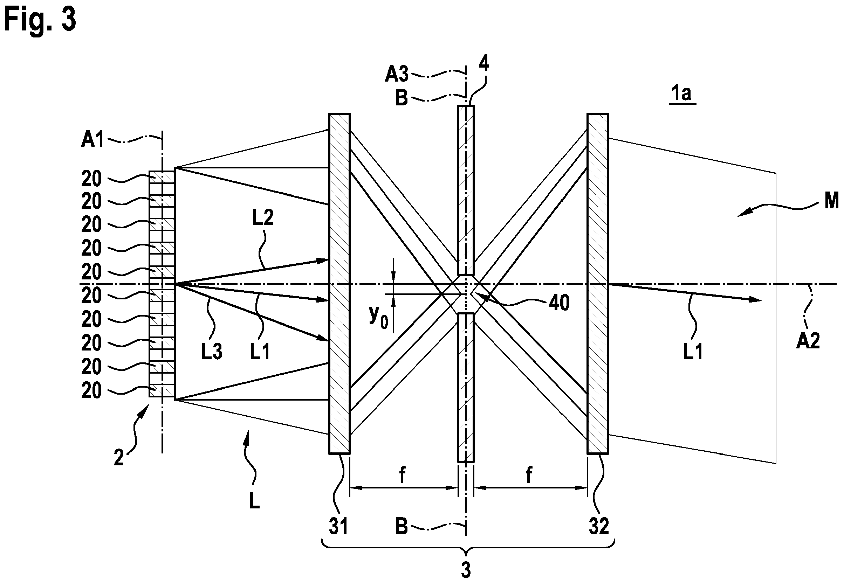

Die Steuereinrichtung berücksichtigt hierzu den Abstand r desjenigen in die Brennebene B fokussierten Lichtanteils, welcher den Nebenkeulen L2, L3 entspricht. Dieser Abstand r ergibt sich aus der Phasenlage der Lichtemitter 20, etwa mithilfe eines Gerchberg-Saxton-Algorithmus, insbesondere mithilfe eines Iterativen Fouriertransformations-Algorithmus. Beispielsweise kann auf einem Speicher der Steuereinrichtung ein Zusammenhang zwischen den Ansteuersignalen der Lichtemitter 20 der Phased-Array-Antenne 2 und den entsprechenden Abständen r abgelegt sein. In Abhängigkeit von diesem Zusammenhang verschiebt die Steuereinrichtung die Blendeneinrichtung 4 derart, dass die Nebenkeulen L2, L3 von der Blendeneinrichtung 4 ausgeblendet werden. Vorzugsweise wird die Blendeneinrichtung 4 um einen Versatz $y_0$ verschoben, welcher derart gewählt ist, dass derjenige Anteil des Lichtstrahls L, welcher der Hauptkeule L1 entspricht, durch ein Zentrum der Blendenöffnung 40 hindurchtritt. Dies ist in Figur 3 illustriert.

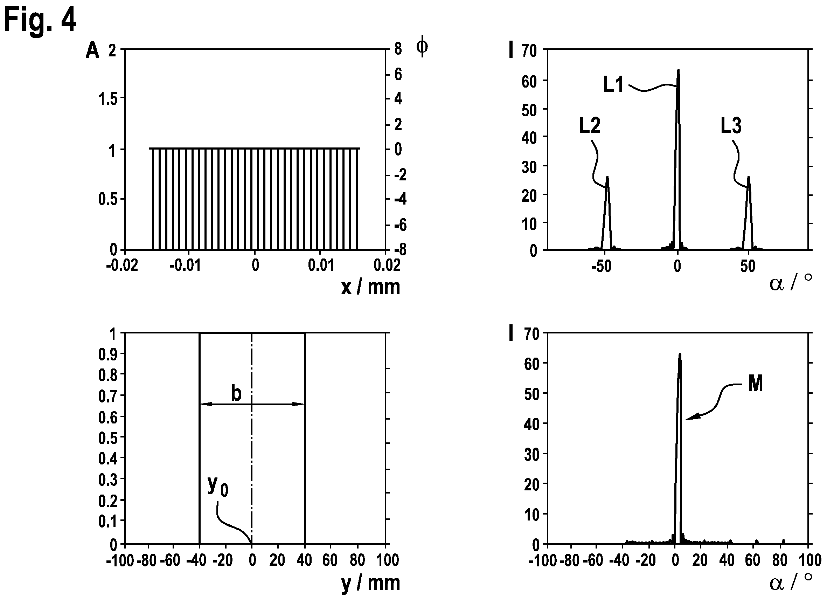

In Figur 4 sind einige Abhängigkeiten für das in Figur 1 illustrierte Szenario gezeigt. So sind links oben die Amplituden und relativen Phasen der einzelnen Lichtemitter 20 in Abhängigkeit von dem Abstand x der Lichtemitter 20 von der zweiten Achse A2 dargestellt. Die Phasen und Amplituden sind hierbei für sämtliche Lichtemitter 20 jeweils identisch. Entsprechend ergibt sich die rechts oben eingezeichnete Abhängigkeit der Intensitäten als Funktion des Aussendewinkels $\alpha$ für die Hauptkeule L1 und die Nebenkeulen L2, L3. Links unten ist in Figur 4 die Position der Blende illustriert, welche symmetrisch zur zweiten Achse A2 positioniert ist. Rechts unten ist die Intensität des Ausgangsstrahls M als Funktion des Aussendewinkels $\alpha$ illustriert. Lediglich der zur Hauptkeule L1 korrespondierende Anteil des Lichtstrahls L wird als Ausgangsstrahl M von der Blendeneinrichtung 4 durchgelassen.

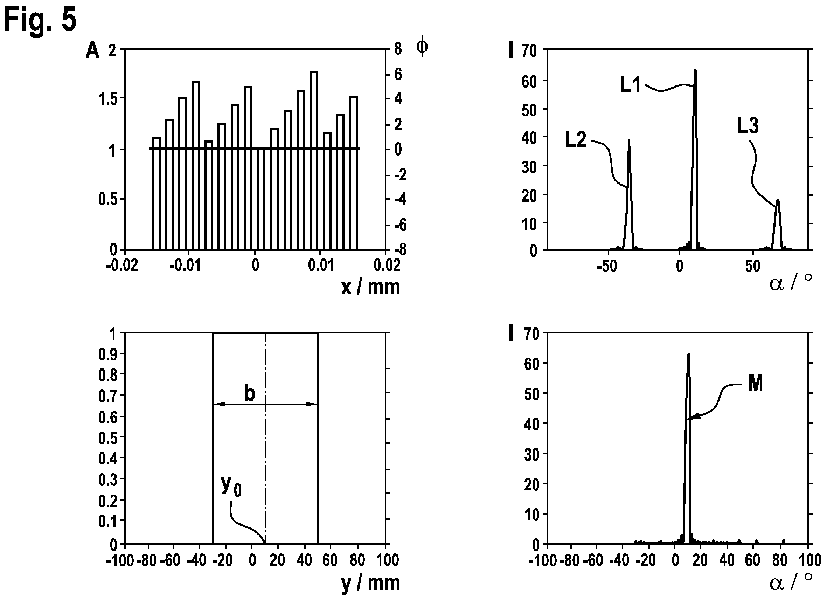

In Figur 5 sind dieselben Abhängigkeiten wie in Figur 4 für das in Figur 3 illustrierte Szenario dargestellt. Die Phasen der von den Lichtemittern 20 ausgesendeten Laserstrahlen unterscheiden sich zumindest teilweise voneinander, sodass sich die rechts oben gezeigte Intensitätsverteilung als Funktion des Aussendewinkels $\alpha$ ergibt. Wie links unten gezeigt, ist die Blende entsprechend entlang der dritten Achse A3 verschoben, sodass sich für den Ausgangsstrahl M die rechts unten gezeigte Abhängigkeit der Intensität von dem Aussendewinkel $\alpha$ ergibt, d. h. lediglich die Hauptkeule L1 als Ausgangsstrahl M ausgesendet wird.

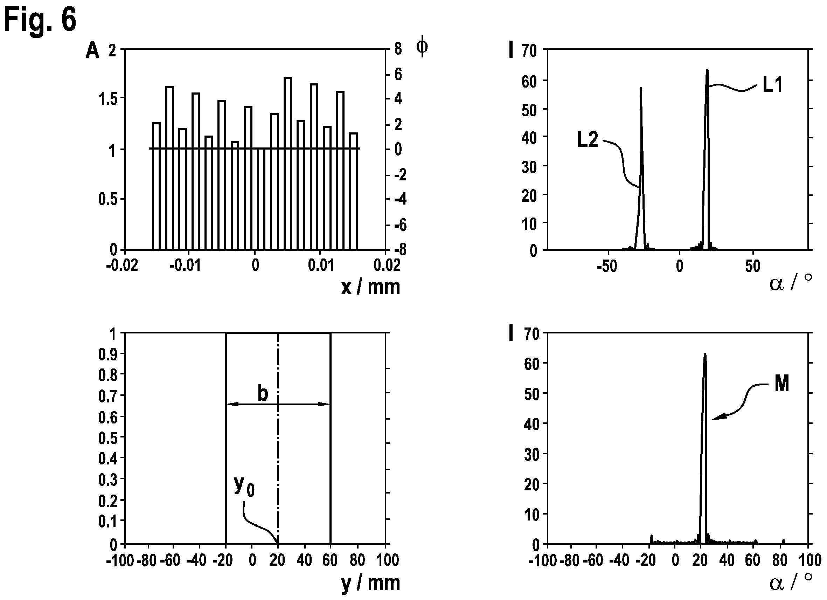

In Figur 6 werden die Abhängigkeiten für ein weiteres Szenario illustriert, wobei die Hauptkeule L1 durch Veränderung der Phasenlage zu einem nochmals höheren Aussendewinkel $\alpha$ wurde. Die Intensität der verbleibenden Nebenkeule L2 ist beinahe so groß wie die Intensität der Hauptkeule L1. Durch weitere Verschiebung der Blendeneinrichtung 4 wird die Nebenkeule L2 ausgeblendet.

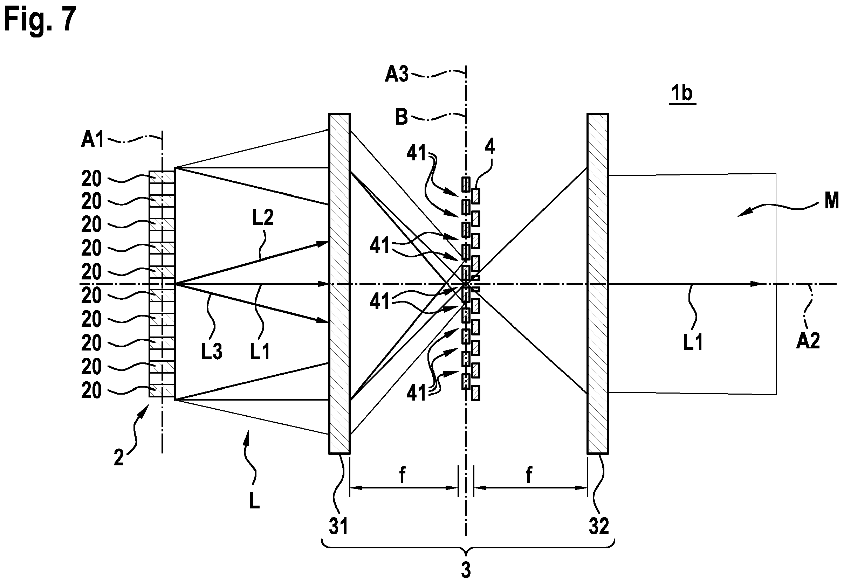

In Figur 7 ist eine schematische Querschnittsansicht eine Lichtaussendevorrichtung 1b gemäß einer zweiten Ausführungsform der Erfindung illustriert. Diese unterscheidet sich von der Lichtaussendevorrichtung 1a gemäß der ersten Ausführungsform durch eine unterschiedliche Blendeneinrichtung 4. Die Blendeneinrichtung 4 umfasst eine Vielzahl von Blendenöffnungen 41, welche unabhängig voneinander geöffnet und geschlossen werden können. Das in Figur 7 illustrierte Szenario entspricht demjenigen der Figur 1, d. h. die Hauptkeule L1 wird entlang der zweiten Achse A2 ausgesendet. In diesem Fall ist lediglich die zentrale Blendenöffnung 41 geöffnet, während sämtliche weiteren Blendenöffnungen 41 geschlossen sind. Somit werden die Nebenkeulen L2, L3 ausgeblendet und lediglich die Hauptkeule L1 wird als Ausgangsstrahl M ausgesendet.

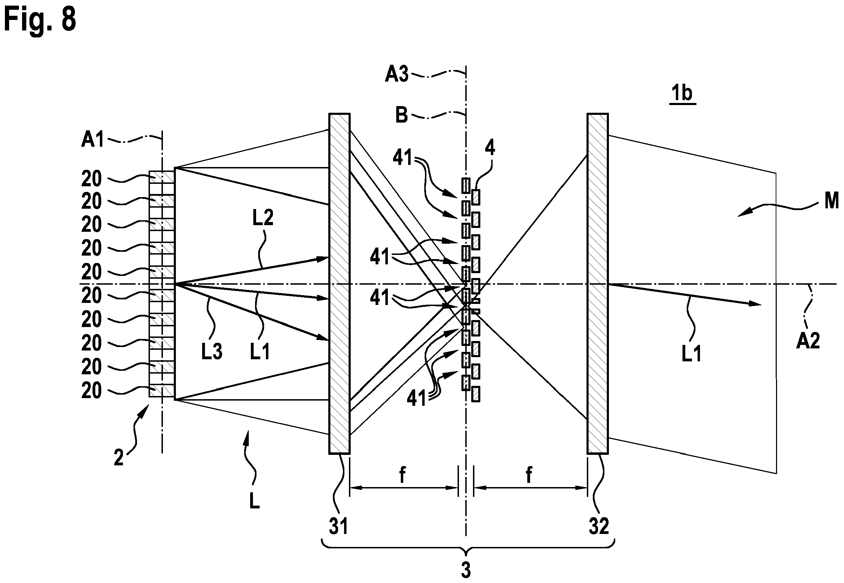

Wie in Figur 8 gezeigt, werden bei einer Veränderung der Aussendewinkel der Keulen die Blendenöffnungen 41 derart geöffnet bzw. geschlossen, dass wiederum sämtliche Nebenkeulen L2, L3 ausgeblendet werden und lediglich die Hauptkeule L1 durch die Blendeneinrichtung 4 hindurchtreten kann.

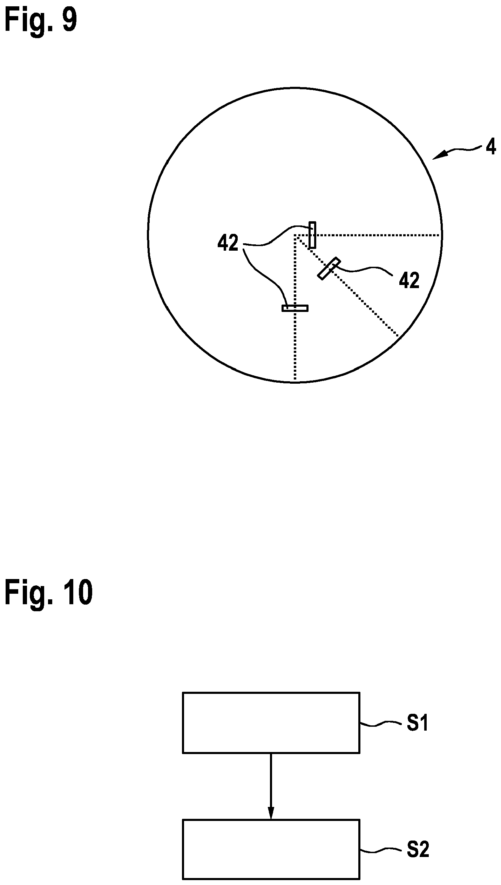

In Figur 9 ist eine Draufsicht auf eine weitere Blendeneinrichtung 4 eine Lichtaussendevorrichtung gemäß einer Ausführungsform der Erfindung illustriert. Die Blendeneinrichtung 4 ist als eine kreisförmige Scheibe ausgebildet und umfasst eine Vielzahl von schlitzförmigen Blendenöffnungen 42, welche bei unterschiedlichen Radien und Winkeln in der kreisförmigen Scheibe ausgebildet sind. Die Blendeneinrichtung 4 ist um eine Rotationsachse durch das Zentrum der Scheibe rotierbar, wobei die Rotationsachse zur zweiten Achse A2 parallel ist und vorzugsweise um einen vorgegebenen Abstand zu dieser versetzt ist. Durch Drehung der Scheibe kann eine der Blendenöffnungen 42 in den Strahlengang des Lichtstrahls L eingebracht werden und lässt entsprechend vorgegebene Beugungsmaxima durch bzw. blendet diese aus.

Figur 10 zeigt ein Flussdiagramm für ein Verfahren zum Aussenden von Licht. Hierzu wird in einem ersten Verfahrensschritt S1 ein Lichtstrahl L mittels einer Phased-Array-Antenne ausgesendet. Der Lichtstrahl trifft auf eine optische Einrichtung 3 mit einer oben beschriebenen ersten Linse 31 und zweiten Linse 32. In einer gemeinsamen Brennebene B der ersten Linse 31 und der zweiten Linse 32 ist eine Blendeneinrichtung 4 ausgebildet, welche vorzugsweise wie eine der oben beschriebenen Blendeneinrichtungen 4 ausgebildet ist.

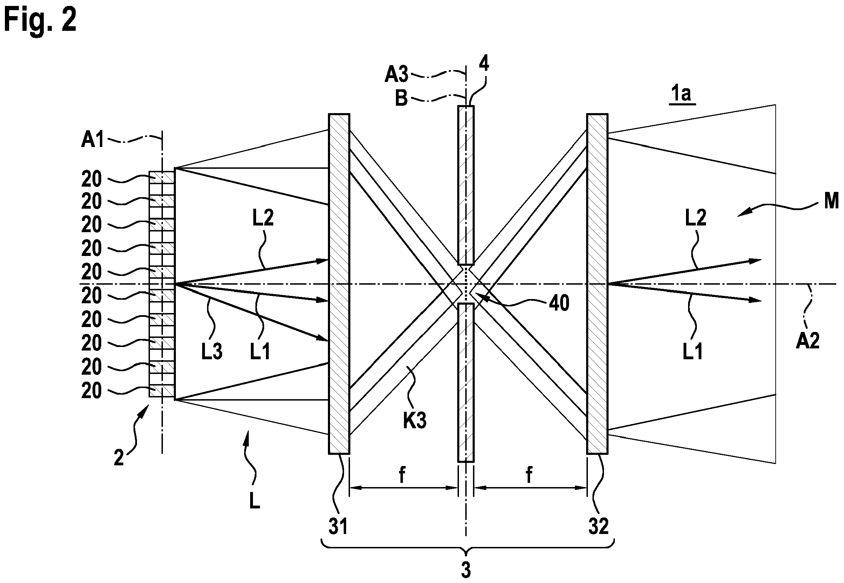

In einem Verfahrensschritt S2 wird eine Position von mindestens einer Blendenöffnung der Blendeneinrichtung 4 innerhalb der Brennebene B und/oder ein Öffnungsgrad der mindestens einen Blendenöffnung verändert. So kann die Blendeneinrichtung 4 eine Vielzahl von Blendenöffnungen 41 aufweisen, welche unabhängig voneinander geöffnet und geschlossen werden können, wie in Figur 8 illustriert. Weiter können die mindestens eine Blendenöffnung auch entlang einer dritten Achse A3 verschoben werden, wie in den Figuren 1 bis 3 illustriert. Auch eine Kombination der Verfahren ist denkbar, sodass sowohl eine Position der Blendenöffnungen als auch ein Öffnungsgrad der Blendenöffnungen variiert werden. Insbesondere können die Blendenöffnungen auch teilweise geschlossen werden, d. h. ein Durchmesser bzw. ein Öffnungsgrad der Blendenöffnungen wird vergrößert oder verkleinert.

**Patentansprüche**

1. Lichtaussendevorrichtung (la; 1b), mit:

    einer Phased-Array-Antenne (2), welche dazu ausgebildet ist, einen Lichtstrahl (L) auszusenden;
    einer optischen Einrichtung (3), mit mindestens einem ersten optischen Element (31) und mindestens einem zweiten optischen Element (32), welche im Strahlengang des ausgesendeten Lichtstrahls (L) angeordnet sind, wobei das mindestens eine erste optische Element (31) und das mindestens eine zweite optische Element (32) eine gemeinsame Brennebene (B) aufweisen, sodass der Lichtstrahl (L) mittels des mindestens einen ersten optischen Elements (31) in die Brennebene (B) fokussierbar und nach dem Durchgang durch das mindestens eine zweite optische Element (32) als Ausgangsstrahl (M) aussendbar ist; und
    einer Blendeneinrichtung (4), welche im Bereich der Brennebene (B) im Strahlengang angeordnet ist, wobei die Blendeneinrichtung (4) mindestens eine Blendenöffnung (40; 41; 42) aufweist, und wobei eine Position der mindestens einen Blendenöffnung (40; 41; 42) innerhalb der Brennebene (B) und/oder ein Öffnungsgrad der mindestens einen Blendenöffnung (40; 41; 42) veränderbar sind.

2. Lichtaussendevorrichtung (la; 1b) nach Anspruch 1, wobei das mindestens eine erste optische Element (31) und das mindestens eine zweite optische Element (32) als Sammellinsen mit identischer Brennweite (f) ausgebildet sind und wobei ein Abstand zwischen dem mindestens einen ersten optischen Element (31) und dem mindestens einen zweiten optischen Element (32) der doppelten Brennweite (f) entspricht.

3. Lichtaussendevorrichtung (la; 1b) nach Anspruch 1, wobei das mindestens eine erste optische Element (31) und das mindestens eine zweite optische Element (32) als Spiegelelemente ausgebildet sind.

4. Lichtaussendevorrichtung (la; 1b) nach einem der vorangehenden Ansprüche, wobei die Blendeneinrichtung (4) eine Vielzahl von Blendenöffnungen (40; 41; 42) umfasst, welche unabhängig voneinander geöffnet oder geschlossen werden können.

5. Lichtaussendevorrichtung (1a; 1b) nach einem der vorangehenden Ansprüche, wobei die Phased-Array-Antenne (2) eine Vielzahl von entlang einer Achse (A1) angeordneten Phasenantennen (20) umfasst, und wobei die Blendenöffnung (40; 41; 42) in der Brennebene (B) parallel zu der Achse (A1) verschiebbar ist.

6. Lichtaussendevorrichtung (1a; 1b) nach einem der vorangehenden Ansprüche, weiter mit einer Steuereinrichtung, welche dazu ausgebildet ist, in Abhängigkeit von Phasen und Amplituden der Phased-Array-Antenne (2) die Blendeneinrichtung (4) anzusteuern, um die Position und/oder den Öffnungsgrad der mindestens einen Blendenöffnung (40; 41; 42) derart zu verändern, dass vorgegebene Interferenzmaxima des ausgesendeten Lichtstrahls (L) mittels der Blendeneinrichtung (4) entweder ausgeblendet oder durchgelassen werden.

7. Lichtaussendevorrichtung (la; 1b) nach Anspruch 6, wobei die Steuereinrichtung die Position und/oder den Öffnungsgrad der mindestens einen Blendenöffnung (40; 41; 42) derart verändert, dass eine Hauptkeule (L1) des ausgesendeten Lichtstrahls (L) durchgelassen wird und Nebenkeulen (L2, L3) des ausgesendeten Lichtstrahls (L) ausgeblendet werden.

8. Lichtaussendevorrichtung (1a; 1b) nach einem der vorangehenden Ansprüche, wobei die Blendeneinrichtung (4) eine drehbare Scheibe umfasst, wobei eine Vielzahl von Blendenöffnungen (40; 41; 42) bei unterschiedlichen Radien und Winkeln auf der Scheibe ausgebildet sind.

9. Verfahren zum Aussenden von Licht, mit den Schritten:

    Aussenden (S1) eines Lichtstrahls (L) mittels einer Phased-Array-Antenne (2) auf eine optische Einrichtung (3), welche mindestens ein erstes optisches Element (31) und mindestens ein zweites optisches Element (32) aufweist, die im Strahlengang des ausgesendeten Lichtstrahls (L) angeordnet sind, wobei das mindestens eine erste optisches Element (31) und das mindestens eine zweite optische Element (32) eine gemeinsame Brennebene (B) aufweisen, wobei im Bereich der Brennebene (B) im Strahlengang eine Blendeneinrichtung (4) angeordnet ist, und wobei die Blendeneinrichtung (4) mindestens eine Blendenöffnung (40; 41; 42) aufweist; und
    Verändern (S2) einer Position der mindestens einen Blendenöffnung (40; 41; 42) innerhalb der Brennebene (B) und/oder eines Öffnungsgrads der mindestens einen Blendenöffnung (40; 41; 42).

**10.** Verfahren nach Anspruch 9, wobei in Abhängigkeit von Phasen und Amplituden der Phased-Array-Antenne (2) die Position und/oder der Öffnungsgrad der mindestens einen Blendenöffnung (40; 41; 42) derart verändert werden, dass vorgegebene Interferenzmaxima des ausgesendeten Lichtstrahls (L) mittels der Blendeneinrichtung (4) entweder ausgeblendet oder durchgelassen werden.

# Fig. 1

EP 3 396 415 A1

Fig. 2

EP 3 396 415 A1

Fig. 3

# Fig. 4

# Fig. 5

EP 3 396 415 A1

# Fig. 6

EP 3 396 415 A1

Fig. 7

EP 3 396 415 A1

# Fig. 8

EP 3 396 415 A1

# Fig. 9

# Fig. 10

**Europäisches Patentamt**
**European Patent Office**
**Office européen des brevets**

# EUROPÄISCHER RECHERCHENBERICHT

**Nummer der Anmeldung**

EP 18 16 6942

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2015/346340 A1 (YAACOBI AMI [US] ET AL) 3. Dezember 2015 (2015-12-03) * Absätze [0047] - [0092] * * Abbildungen 1-4 * ----- | 1-10 | INV. G01S17/89 G01S17/93 G01S7/481 |
| A | MARTIJN J.R. HECK: "Abstract", NANOPHOTONICS, Bd. 6, Nr. 1, 25. Juni 2016 (2016-06-25), XP055455944, ISSN: 2192-8606, DOI: 10.1515/nanoph-2015-0152 * das ganze Dokument * ----- | 1-10 | |
| A | WO 2016/118231 A1 (RAYTHEON CO [US]) 28. Juli 2016 (2016-07-28) * Seiten 5-15 * * Abbildungen 1,2 * ----- | 1-10 | |
| A | DE 10 2014 223900 A1 (CONTI TEMIC MICROELECTRONIC GMBH [DE]) 25. Mai 2016 (2016-05-25) * Absätze [0056] - [0079] * * Abbildungen 1-10 * ----- | 1-10 | RECHERCHIERTE SACHGEBIETE (IPC) G01S G02F |

Der vorliegende Recherchenbericht wurde für alle Patentansprüche erstellt

| Recherchenort | Abschlußdatum der Recherche | Prüfer |
|---|---|---|
| München | 12. September 2018 | Kruck, Peter |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 16 6942

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-09-2018

| Im Recherchenbericht angeführtes Patentdokument | Datum der Veröffentlichung | Mitglied(er) der Patentfamilie | Datum der Veröffentlichung |
|---|---|---|---|
| US 2015346340 A1 | 03-12-2015 | US 2015346340 A1<br>US 2017016990 A1 | 03-12-2015<br>19-01-2017 |
| WO 2016118231 A1 | 28-07-2016 | EP 3248025 A1<br>US 2016216370 A1<br>WO 2016118231 A1 | 29-11-2017<br>28-07-2016<br>28-07-2016 |
| DE 102014223900 A1 | 25-05-2016 | DE 102014223900 A1<br>US 2016146941 A1 | 25-05-2016<br>26-05-2016 |

EPO FORM P0461

Für nähere Einzelheiten zu diesem Anhang : siehe Amtsblatt des Europäischen Patentamts, Nr.12/82